**Europäisches Patentamt**

**European Patent Office**

**Office européen des brevets**

(19)

(11) Veröffentlichungsnummer: **0 209 533**
**B1**

(12) # EUROPÄISCHE PATENTSCHRIFT

(45) Veröffentlichungstag der Patentschrift:
**03.05.89**

(21) Anmeldenummer: **86900147.9**

(22) Anmeldetag: **27.12.85**

(86) Internationale Anmeldenummer:
**PCT/EP 85/00740**

(87) Internationale Veröffentlichungsnummer:
**WO 86/04585 (14.08.86** Gazette 86/18)

(51) Int. Cl.⁴: **C 02 F 1/52** // D21D3/00,
C08C1/14

(54) **VERFAHREN UND ANORDNUNG ZUM AUSFLOCKEN VON FLOCKIERBAREN SUBSTANZEN IN SUSPENSIONEN, INSBESONDERE ZUR REINIGUNG DES RÜCKWASSERS VON DEINKING-ANLAGEN.**

(30) Priorität: **31.01.85 CH 421/85**

(43) Veröffentlichungstag der Anmeldung:
**28.01.87 Patentblatt 87/5**

(45) Bekanntmachung des Hinweises auf die Patenterteilung:
**03.05.89 Patentblatt 89/18**

(84) Benannte Vertragsstaaten:
**AT DE FR IT NL SE**

(56) Entgegenhaltungen:
**EP-A- 0 003 327**
**CH-A- 443 164**
**DE-A- 2 353 874**
**FR-A- 740 249**
**US-A- 3 932 282**
**US-A- 4 173 532**

(73) Patentinhaber: **SULZER-ESCHER WYSS GMBH, Escher Wyss-Strasse 25 Postfach 1380, D-7980 Ravensburg (DE)**

(72) Erfinder: **MATZKE, Wolfgang, Max-Reger-Strasse 28, D-7981 Berg (DE)**
Erfinder: **MAYR, Hermann, Burgsteige 1 a, D-7906 Blaustein (DE)**

## Beschreibung

*Technisches Gebiet*

Die Erfindung betrifft ein Verfahren zur Reinigung des Rückwassers von Deinking-Anlagen, bei welchem das Rückwasser von einem Rückwasserbehälter über eine Leitung einer Klärvorrichtung zugeführt wird, in der eine Flotation erfolgt, wobei dem Rückwasser kationische, anionische und/oder nicht-ionische Mittel zugegeben werden, sowie eine Anordnung zur Durchführung des Verfahrens.

Solche Deinking-Anlagen dienen dazu, Druckfarbe von Altpapier zu trennen und zu entfernen, damit ein sauberer, heller wiederverwendbarer Papierstoff als Rohstoff für Neupapier entsteht. Dazu wird das Altpapier in Wasser suspendiert und mit Chemikalien versetzt. Die Abtrennung der Druckfarben vom Altpapier erfolgt überwiegend im alkalischen bis hin zum neutralen pH-Bereich. Nach Abtrennung der Druckfarben mit Hilfe eines Flotations- und/oder eines Waschprozesses aus der Suspension wird die Altpapier-Suspension in separaten Maschinen oder durch die Druckfarben-Entfernungsmaschine selbst entwässert. Das so wiedergewonnene Wasser wird teilweise oder ganz rezykliert und zur erneuten Auflösung von Altpapier wiederverwendet.

Dieses Rückwasser ist jedoch mit Druckfarben, Faserfeinstoffen, Kaolin, Schmutz und anderen Substanzen, die beim Deinking-Verfahren aus dem Altpapier abgetrennt werden, verunreinigt. Der Gehalt an suspendierten Feststoffen kann beispielsweise zwischen 500 und 3500 mg/l liegen. Würde dieses Wasser unbehandelt wieder zur Auflösung von Altpapier verwendet, würde das Altpapier zusätzlich verschmutzt. Das Rückwasser muß deshalb gereinigt werden.

*Stand der Technik*

Eine Möglichkeit zur Reinigung dieses Abwassers besteht in der Verwendung von Flotations-Kläranlagen. In diesen Kläranlagen werden koagulierende oder flockende Chemikalien dem zu klärenden Wasser beigegeben. In den Flotations-Kläranlagen wird Luft zugeführt und im Wasser fein verteilt. Im Klärbecken schwimmen dann die Feststoffe, von der Luft an die Oberfläche transportiert, als Schwimmschlamm auf und können mit entsprechenden Einrichtungen vom Wasser abgeschöpft werden. Auf diese Weise wird das Wasser gereinigt. Der Reinigungsgrad hängt dabei von verschiedenen Parametern ab. Erwünscht ist es, ihn auf unter 100 mg/l einzustellen. Erreicht werden soll dies abhängig von der Luftzufuhr, den Chemikalien, ihrer Qualität und Quantität, und abhängig von dem Erfordernis der Deinking-Anlage.

Zur Klärung des Rückwassers sind bisher kationische Mittel einzeln oder in Kombination mit anionischen Chemikalien, verwendet worden, z.B. Alaun, oder ein anderes geeignetes polymeres kationisches Flockungsmittel und nötigenfalls zusätzlich ein anionisches Polymer, z.B. Polyacrylamid. Auch nicht-ionische Flockungsmittel, z.B. hochmolekulare Polyoxyprodukte können verwendet werden. Bei Kombination derartiger Mittel werden in der Regel die kationischen Mittel vor oder nach der Pumpe in der Verbindungsleitung zwischen dem Rückwasserbehälter und dem Klärbehälter und die anionischen unmittelbar vor dem Klärbehälter zugegeben. Die Zugabe erfolgt dabei häufig in der Reihenfolge, daß zunächst das kationische Mittel, dann belüftetes Klarwasser und anschließend das anionische Mittel zugegeben wird. Auf diese Weise läßt sich zwar ein Teil der im Rückwasser befindlichen Feststoffe entfernen, jedoch bleibt vor allem im alkalischen Medium noch ein erhöhter Teil der Feststoffe im Rückwasser, d.h. die Reinigungswirkung ist noch nicht ausreichend.

Aus CH 443 164 ist ein Abwasser-Klärverfahren speziell für das Rückwasser von Deinking-Anlagen bekannt, bei dem in einem Klärbehälter nacheinander mehrere koagulierende tensio-aktive, saure und basische Mittel zugegeben werden, um ein Ausflocken bestimmter Substanzen zu erreichen. Anschließend können die geflockten Schmutzstoffe abgesetzt oder flotiert werden. Dabei ist jedoch nur ein diskontinuierlicher Betrieb möglich, und die Reinigungsleistung ist nicht optimal.

Aus US 4 173 532 ist ein Reinigungsverfahren für Industrie-Abwässer bekannt, bei dem die Suspension in einem Klärbehälter/Absetzbehälter in eine Strömung versetzt wird und der Strömung stufenweise ionische, kationische und anionische Mittel zur Koagulation zugegeben werden. Die Durchmischung der Suspension mit den zugegebenen Mitteln ist hierbei jedoch ungenügend und ebenfalls die Reinigungsleistung.

Eine Vorrichtung zur Abwasserklärung beschreibt die US-Patentschrift 3 932 282. In dieser Vorrichtung befindet sich ein Koagulator, in dem zwei Koagulationschemikalien dem Rückwasser zugemischt werden. Nach Versetzen mit lufthaltigem Wasser erfolgt eine weitere Chemikalienbehandlung und anschließend eine Flotationsklärung. Das mit dieser Vorrichtung ausführbare Verfahren dient jedoch dem Ausfällen von Metall aus einer Emulsion und erbringt bei der Klärung von Rückwasser aus Deinking-Anlagen keine befriedigenden Ergebnisse, da es andere chemische Abläufe anwendet.

Die Erfindung setzt sich die Aufgabe, die genannten Nachteile des Standes der Technik zu vermeiden und insbesondere ein kontinuierliches Verfahren und eine Anordnung zur Reinigung des Rückwassers von Deinking-Anlagen zu schaffen, bei denen die Reinigungsleistung verbessert ist und ein größerer Teil der Feststoffe aus dem Rückwasser entfernt wird. Außerdem soll die Abhängigkeit der Reinigungswirkung von Schwankungen des pH-Wertes, Feststoffmenge und Feststoffart reduziert und die Wirtschaftlichkeit des Prozessors verbessert werden.

*Darstellung der Erfindung*

Erfindungsgemäß wird diese Aufgabe dadurch gelöst, daß die Zugabe von wenigstens drei verschiedenen, als Flockungsmittel dienenden Chemikalien an wenigstens drei verschiedenen Stellen auf dem Zuführungswege der Suspension der Klärvorrichtung erfolgt.

Mit Vorteil kann z.B. ein kurzkettiges niedermolekulares, stark kationisches Mittel bereits im Rückwasserbehälter, ein langkettiges, hochmolekulares, kationisches Mittel in der Leitung zwischen Rückwasserbehälter und Kläranlage, und ein langkettiges, hochmolekulares anionisches Mittel nach Zugabe des langkettigen kationischen Mittels in der Leitung vor der Kläranlage zugegeben werden.

Mit Vorteil bestehen die zugegebenen Mittel aus einem niedermolekularen, stark kationischen Polymer, aus Verbindungen mit mehrwertigen Metallkationen, sowie Kombinationen von Polymer und Metallkationen, und weiterhin aus hochmolekularen, kationischen und anionischen und/oder nicht-ionischen Polymeren.

Dieser Erfindung liegt der Gedanke zugrunde, daß man durch eine drei- oder mehrstufige Flockungsmittelzugabe nacheinander in die Zuführleitung zur Kläranlage eine besonders stabile, leicht zu entfernende Flocke erhält, da durch angepasste Ladungsneutralisation und anschließend erzeugte Brücken- und Mosaikbindung ein gezielter Flockenaufbau erreicht wird. Durch die Zugabe der drei Mittel nacheinander in die Zuführleitung zur Klärvorrichtung wird erreicht, daß die Durchmischung nahezu vollständig ist, da die gesamte zugeführte Suspension erfaßt wird, und daß für die Mittel eine genügende Reaktionszeit zur Verfügung steht, und die Reaktion vor der Einleitung in den Klärbehälter bereits abgeschlossen ist, d.h. daß die gesamte Zeit im Klärbehälter ausschließlich zur Klärung zur Verfügung steht und daher kein Zeitverlust entsteht. Außerdem können die Zugabestellen so gewählt werden, daß sie auf die besonders bei hochmolekularen Mitteln erhebliche Scherempfindlichkeit abgestimmt ist, beispielsweise durch Zugabe nach der Pumpe an einer Stelle geringer Turbulenz, so daß keine Beeinträchtigung der Wirkung durch Zerbrechen oder Verknäuelung der hochmolekularen Verbindungen erfolgt.

Bei einer vorteilhaften Ausgestaltung der Erfindung ist in der Leitung eine Pumpe vorgesehen, wobei die Zugabe des langkettigen kationischen und anionischen Mittels nach der Pumpe erfolgt zur Vermeidung von schädigenden Scherkräften.

*Beschreibung von Ausführungsbeispielen der Erfindung*

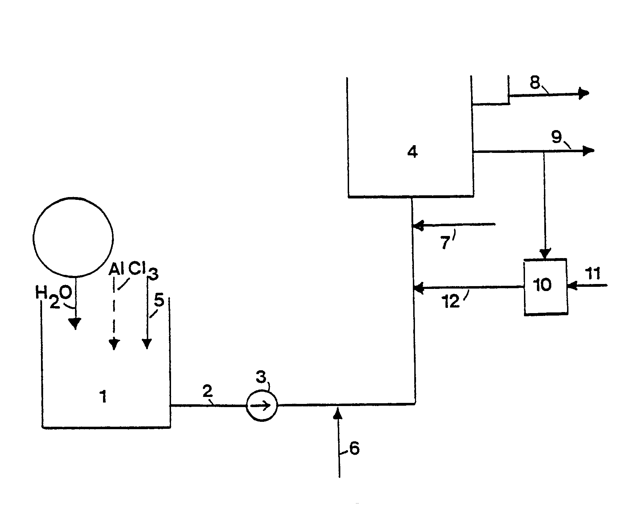

Eine Anordnung zur Durchführung des erfindungsgemäßen Verfahrens ist in der beiliegenden Figur als Beispiel dargestellt.

Ein Rückwasserbehälter 1 ist dabei mit einer Leitung 2, in der eine Pumpe 3 vorgesehen ist, mit einer Kläranlage 4 verbunden. Dem Rückwasser im Behälter 1 wird dabei kurzkettiges, niedermolekulares, stark kationisches Mittel 5 zur weitgehenden Ladungsneutralisation zugeführt. Dieses Mittel kann beispielsweise aus niedermolekularem, stark kationischem Polymer sowie Kombinationen eines solchen Polymers mit mehrwertigen Metallkationenverbindungen, z.B. Aluminiumchlorid AlCl$_3$ oder Aluminiumoxidchlorid bestehen. Die getrennte Zugabe der Metallkationenverbindungen ist ebenfalls möglich. Im Gegensatz zum vorher beschriebenen Dreiflocksystem (Tri Floc) kann man hier von einem Vierflocksystem (Tetra Floc) sprechen.

Bei genügender Durchmischung des Rückwassers mit dem Mittel kann sogar auf die übliche Verdünnung bei der Anwendung von Polymeren verzichtet werden. In die Leitung 2 wird nach der Pumpe 3 ein langkettiges, hochmolekulares kationisches Mittel 6 zugeführt und anschließend kurz vor dem Klärbehälter 4 ein hochmolekulares anionisches Mittel 7. Aus dem Klärbehälter 4 werden die Verunreinigungen als Schwimmschlamm 8 abgeführt, sowie das geklärte Rückwasser als Klarwasser 9. Ein Teil 10 des Klarwassers wird abgezweigt, mit Luft 11 versetzt und an einer Stelle 12 zwischen den Zugabestellen 6 und 7 in die Leitung 2 gegeben.

*Beispiel*

Bei Versuchen wurde zur Reinigung des Rückwassers einer Deinking-Anlage mit einer Feststoffkonzentration von etwa 1500 ppm einerseits ein klassisches Verfahren mit Zugabe von kationischem Polymer und anionischem Polymer als Flockungsmittel vor der Kläreinrichtung, andererseits ein erfindungsgemäßes Dreiflocksystem mit Dosierung an drei Stellen und in verschiedenen Konzentrationen verglichen.

Bei dem genannten klassischen Verfahren wurde im Klarwasser nur noch ein Feststoffgehalt zwischen 225 und 550 ppm bei einem pH-Wert von 8,5 erreicht. Der Feststoffgehalt ließ sich nur durch wesentlich höhere Dosierung der beiden Flockungsmittel noch etwas vermindern.

Verglichen damit ergab sich bei Zugabe eines stark kationischen, niedermolekularen Polymers direkt in den Rückwasserbehälter und Zugabe eines langkettigen, hochmolekularen kationischen Polymers sowie eines hochmolekularen, anionischen Polymers ein Festoffgehalt des Klarwassers zwischen 50 ppm und beim ungünstigsten Versuch 188 ppm, und zwar bei einem höheren pH-Wert von 8,9. Die Gesamtzugabe an Flockungschemikalien war bei diesem Vergleich annähernd gleich.

Das Dreiflocksystem ergab mit Zugabe der drei Flockungsmittel an den vorstehend drei verschiedenen Stellen der Anlage eine außerordentlich starke Reduzierung des Festoffgehaltes im Klarwasser und somit gegenüber vorbekannten Verfahren eine erhebliche Verbesserung. Die Schwankungsbreite im Festoffgehalt des Klarwassers reduzierte sich von 325 ppm auf 138 ppm.

Die Konzentration des Schwimmschlammes erhöhte sich aufgrund der stabileren Flockenbildung von ca. 2,0% auf 4,5 bis 6,5%. Es ist damit in weiteren nachgeschalteten Entwässerungsmaschinen besser zu entwässern.

**Patentansprüche**

1. Verfahren zur Reinigung des Rückwassers von Deinking-Anlagen, bei welchem das Rückwasser von einem Rückwasserbehälter (1) über eine Leitung (2) einer Klärvorrichtung (4) zugeführt wird, in der eine Flotation erfolgt, wobei dem Rückwasser kationische, anionische und/oder nicht-ionische Mittel zugegeben werden, dadurch gekennzeichnet, daß die Zugabe von wenigstens drei verschiedenen als Flockungsmittel dienenden Chemikalien an wenigstens drei verschiedenen Stellen (5, 6, 7) auf dem Zuführungswege der Suspension zur Klärvorrichtung (4) erfolgt.

2. Verfahren nach Anspruch 1, dadurch gekennzeichnet, daß das erste Flockungsmittel (5) ein niedermolekulares, kationisches Mittel, das zweite Flockungsmittel (6) ein hochmolekulares kationisches Mittel und das dritte Flockungsmittel (7) ein hochmolekulares anionisches oder nicht-ionisches Mittel enthalten.

3. Verfahren nach Anspruch 2, dadurch gekennzeichnet, daß das niedermolekulare kationische Mittel aus einem stark kationischen Polymer, aus Verbindungen mit mehrwertigen Metallkationen sowie Kombinationen von Polymer und Metallkationen bestehen kann, und/oder daß das hochmolekulare, kationische und/oder das hochmolekulare anionische und/oder nicht-ionische aus Polymeren bestehen kann.

4. Verfahren nach einem der Ansprüche 1 bis 3, dadurch gekennzeichnet, daß niedermolekulare, kationische Mittel (5) bereits im Rückwasserbehälter, daß hochmolekulare, kationische Mittel (6) in der Leitung (2), zwischen Rückwasserbehälter (1) und Kläranlage (4), und daß hochmolekulare, anionische und/oder nicht-ionische Mittel (7) nach Zugabe des hochmolekularen kationischen Mittels (6) in der Leitung (2) zugegeben werden.

5. Verfahren nach Anspruch 4, dadurch gekennzeichnet, daß in der Leitung (2) eine Pumpe (3) vorgesehen ist, und daß die Zugabe der hochmolekularen Mittel (6) nach der Pumpe (3) erfolgt.

6. Verfahren nach Anspruch 4 oder 5, dadurch gekennzeichnet, daß eine Zugabe von mit Luft versetzten Klarwassers in die Leitung (2) an einer Stelle (12) zwischen der Zugabestelle des hochmolekularen kationischen Mittels (6) und der des anionischen und/oder nicht-ionischen Mittels (7) erfolgt.

7. Vorrichtung zur Durchführung des Verfahrens nach einem der Ansprüche 1 bis 6, mit einer Rückwasser führenden Leitung (2), mit drei Zugabestellen, durch die das Rückwasser mit Chemikalien versetzbar ist sowie einer Zugabestelle für mit Luft versetztes Wasser zwischen der zweiten und dritten Chemikalienzugabestelle, wobei die Rückwasserleitung in eine nach dem Flotationsverfahren arbeitende Klärvorrichtung (4) mündet, dadurch gekennzeichnet, daß im Rückwasserbehälter (1) eine Zugabestelle (5) für niedermolekulare kationische Mittel, daß in der Leitung (2) eine Zugabestelle (6) für hochmolekulare kationische Mittel und zwischen dieser Zugabestelle (6) und der Klärvorrichtung (4) eine Zugabestelle (7) für hochmolekulare anionische und/oder nicht-ionische Mittel vorgesehen ist.

8. Anordnung nach Anspruch 7, dadurch gekennzeichnet, daß zwischen dem Rückwasserbehälter (1) und der Zugabestelle (6) für hochmolekulare kationische Mittel eine Pumpe (3) vorgesehen ist.

9. Anordnung nach Anspruch 7 oder 8, dadurch gekennzeichnet, daß zwischen der Zugabestelle (6) für hochmolekulare kationische Mittel und der Zugabestelle (7) für hochmolekulare anionische und/oder nicht-ionische Mittel eine Zugabestelle (12) von aus dem Klärbehälter (4) abgezweigtes, mit Luft versetztes Klarwasser vorgesehen ist.

## Claims

1. A process for cleaning recirculated water in deinking plants, in which the recirculated water is supplied from a recirculated water reservoir (1) via a pipe (2) to clarification equipment (4) in which a flotation takes place, and wherein cationic, anionic and/or non-ionic agents are added to the recirculated water, characterised in that at least three different chemicals serving as flocculation agents are added to the water at at least three different points (5, 6, 7) in its path to the clarification equipment (4).

2. A process according to Claim 1, characterised in that a first flocculation agent (5) contains a low-molecular cationic agent; a second flocculation agent (6) contains a high-molecular cationic agent; and a third flocculation agent (7) contains a high-molecular anionic or non-ionic agent.

3. A process according to Claim 2, characterised in that the low-molecular cationic agent may consist of a strongly cationic polymer, of compounds with multivalent metal cations and combinations of polymer and metal cations, and/or that at least one of the high-molecular cationic agent, the high-molecular anionic agent and the non-ionic agent may consist of polymers.

4. A process according to one of Claims 1 to 3, characterised in that low-molecular cationic agents (5) are added as early as the recirculated water reservoir, in that high-molecular cationic agents (6) are added in the pipe (2), between the recirculated water reservoir (1) and the clarification plant (4), and in that high-molecular anionic and/or non-ionic agents (7) are added in the pipe (2) after addition of the high-molecular cationic agent (6).

5. A process according to Claim 4, characterised in that a pump (3) is provided in the pipe (2) and that the addition of the high-molecular agent (6) takes place downstream of the pump (3).

6. A process according to Claim 4 or 5, characterised in that clean water mixed with air is delivered to the pipe (2) at a point (12) between the point at which the high-molecular cationic agent (6) is added and that at which the anionic and/or non-ionic agent (7) is added.

7. An apparatus for performing a process according to one of Claims 1 to 6 comprising a pipe (2) carrying recirculated water, with three addition points through which chemicals can be mixed with the recirculated water, and a point for adding water mixed with air between the second and third chemical addition points, the recirculated water pipe opening into clarification equipment (4) which operates after the flotation process, characterised in that a first point (5) for adding low-molecular cationic agents is provided in the recirculated water reservoir (1), in that a second point (6) for adding high-molecular cationic agents is provided in the pipe (2) and in that between said first point (6) and the clarification equipment (4) there is provided a third point (7) for adding high-molecular anionic and/or non-ionic agents.

8. A system according to Claim 7, characterised in that a pump (3) is provided between the recirculated water reservoir (1) and the second point (6) for adding high-molecular cationic agents.

9. A system according to Claim 7 or 8, characterised in that a fourth addition point (12) for clean water mixed with air, which is branched off from the clarification tank (4) is provided between the second point (6) for adding high-molecular cationic agents and the third point (7) for adding high-molecular anionic and/or non-ionic agents.

## Revendications

1. Procédé d'épuration de l'eau de rejet d'installations de désencrage, dans lequel l'eau de rejet est transportée à partir d'un réservoir d'eau de rejet (1) par une conduite (2) vers une installation de clarification (4) où a lieu une flottation, tandis qu'on ajoute à l'eau de rejet des agents cationiques, anioniques et/ou non ioniques, caractérisé en ce que l'addition d'au moins trois agents chimiques différents servant d'agents de floculation est effectuée en au moins trois endroits différents (5, 6, 7) sur le trajet du transport de la suspension vers l'installation de clarification (4).

2. Procédé selon la revendication 1, caractérisé en ce que le premier agent de floculation (5) contient un agent cationique de faible poids moléculaire, le deuxième agent de floculation (6) contient un agent cationique de poids moléculaire élevé, et le troisième agent de floculation (7) contient un agent anionique de poids moléculaire élevé ou bien un agent non ionique.

3. Procédé selon la revendication 2, caractérisé en ce que l'agent cationique de faible poids moléculaire peut consister en un polymère fortement cationique, en des combinaisons avec des cations métalliques polyvalents ainsi qu'en des combinaisons de polymère et de cations métalliques et/ou en ce que l'agent cationique de poids moléculaire élevé et/ou l'agent anionique de poids moléculaire élevé et/ou l'agent non ionique peuvent être constitués de polymères.

4. Procédé selon une des revendications 1 à 3, caractérisé en ce que l'agent cationique (5) de faible poids moléculaire est ajouté déjà dans le réservoir d'eau de rejet, en ce que l'agent cationique (6) de poids moléculaire élevé est ajouté dans la conduite (2) entre le réservoir d'eau usée (1) et l'installation de clarification (4), et en ce que l'agent (7) de poids moléculaire élevé, anionique et/ou non ionique, est ajouté dans la conduite (2) après l'addition de l'agent cationique (6) de poids moléculaire élevé.

5. Procédé selon la revendication 4, caractérisé en ce qu'une pompe (3) est prévue dans la conduite (2) et en ce que l'addition de l'agent (6) de poids moléculaire élevé a lieu en aval de la pompe (3).

6. Procédé selon la revendication 4 ou 5, caractérisé en ce qu'un apport d'eau clarifiée mélangée à de l'air a lieu dans la conduite (2) en un emplacement (12) entre l'endroit de l'addition de l'agent cationique (6) de poids moléculaire élevé et l'endroit de l'addition de l'agent anionique et/ou non ionique (7).

7. Système pour la mise en oeuvre du procédé selon une des revendications 1 à 6, avec une conduite (2) pour le transport d'eau de rejet, avec trois postes d'introduction à travers lesquels des produits chimiques peuvent être ajoutés à l'eau de rejet, ainsi qu'avec un poste d'introduction pour de l'eau mélangée à de l'air entre le deuxième et le troisième des postes d'introduction de produits chimiques, la conduite d'eau de rejet débouchant dans une installation de clarification (4) fonctionnant par flottation, caractérisé en ce qu'il est prévu: dans le réservoir d'eau de rejet (1), un poste d'introduction (5) pour un agent cationique de faible poids moléculaire; dans la conduite (2), un poste d'introduction (6) pour des agents cationiques de poids moléculaire élevé; et entre ce dernier poste (6) et l'installation de clarification (4), un poste d'introduction (7) pour des agents anioniques de poids moléculaire élevé et/ou pour des agents non ioniques.

8. Système selon la revendication 7, caractérisé en ce qu'une pompe (3) est prévue entre le réservoir d'eau de rejet (1) et le poste d'introduction (6) des agents cationiques de poids moléculaire élevé.

9. Système selon la revendication 7 ou 8, caractérisé en ce qu'un poste (12) pour l'introduction d'eau dérivée à partir du bassin de clarification (4) et mélangée avec de l'air est prévu entre le poste d'introduction (6) d'agents cationiques de poids moléculaire élevé et le poste d'introduction (7) d'agents anioniques de poids moléculaire élevé et/ou d'agents non ioniques.

H<sub>2</sub>O   Al Cl<sub>3</sub>